# EUROPEAN PATENT SPECIFICATION

(11) **EP 0 421 550 B1**
(45) Date of publication and mention of the grant of the patent: **20.07.1994**
(21) Application number: 90202648.3
(22) Date of filing: 04.10.1990
(51) Int. Cl.: F23N 5/00, G05B 19/04

(54) **Method for the accomodation of a control system for a heating installation with a burner, and a control system for such an installation**
Verfahren zur Anpassung eines Regelsystems für eine Heizanlage mit einem Brenner und ein Regelsystem für solch eine Anlage
Procédé d'ajustement d'un système de commande pour un dispositif de chauffage avec un brûleur et un système de commande pour un tel dispositif

(30) Priority: 06.10.1989 NL 8902492
(43) Date of publication of application: 10.04.1991
(73) Proprietor: NEFIT FASTO B.V., NL-7418 BB Deventer (NL)
(72) Inventor: Slootweg, Jacobus Roelof, NL-9531 MB Borger (NL); Vloon, Paulus Jacobus, NL-7422 RM Deventer (NL)
(74) Representative: van der Arend, Adrianus G.A., Ir.

(56) References cited:
- EP-A- 0 124 330
- EP-A- 0 155 403
- EP-A- 0 332 607
- DE-A- 3 723 024
- FR-A- 2 544 096
- GB-A- 2 188 452
- PATENT ABSTRACTS OF JAPAN vol. 12, no. 197 (M-706)(3044) 8 June 1988;& JP-A-63 3126

## Description

The invention relates to a method for the accomodation of a control unit for an installation to be controlled, the control unit having a central processing unit with a microcomputer and a memory, comprising a step for storing in the memory a control program to be processed by the microcomputer, the program containing instructions for receiving measurement signals originating from sensors of the installation and instructions for controlling actuators of the installation depending on the values of the measurement signals, the instructions containing parameters, in a further step a group of values of variable parameters dependent on the use of the control unit is stored from outside the control unit in a rewritable section of the memory.

A method of this type is disclosed by EP-A-0155403. The prior art method is in particular intendent to accomodate a control unit for controlling the operation of an internal combustion engine of a vehicle. The group of variable parameter values is transferred by a detachable serial transmission line from a programming device. Said values are stored in a rewritable section of a memory of a central processing unit of the control unit, by which the control unit can be accomodated for specific cars.

The prior art method does not provide a safe guard against incorrect programming, in particular of the group of variable parameter values, of the control unit, and therefore does not provide a safe guard against malfunction of the installation, which may even result into hazardous situations.

The object of the invention is to improve said method by providing a safe guard against incorrect programming.

The method according to the invention is in particular intendent to accomodate a control unit for a heating installation with a burner. In this regard it is observed that until now for each type of heating installation and for each application environment thereof a corresponding control unit was designed and produced. Since the number of types of heating installations and associated control units is large, inter alia because different safety requirements have to be complied with in different countries, the costs for designing and production of such control system are high. Moreover, the cost price is even increased because a relatively large number of different control units have to be kept in stock. Further it is observed that with change of circumstances or environment, such as when replacing sensors or actuators, the control unit must be adapted or replaced, which, for the prior art control unit, is very time consuming and involves high costs.

To overcome the drawbacks of the prior art method and in view of said observations the method according to the invention is characterized by that to each group of variable parameter values there is assigned a variable parameter having a value assigned exclusively to the group, in a still further step, after fitting of the control unit in the installation, the type of installation is detected, a value is assigned to a variable denoting the detected installation type, in a subsequent step, the value assigned exclusively to said stored group of variable parameters is compared with the installation type variable value, and an error signal is generated if said compared values are not identical.

By this it is prevented that an incorrect group of variable parameter values for a specific type of heating installation and for a specific application thereof is entered into the memory of the control unit, thus preventing malfunction of the heating installation and hazardous situations.

The group of variable parameter values can be entered into the memory of the control unit at any time after the physical production of the unit, thus before and after fitting the control unit in a heating installation and after a change of circumstances at the premises has occurred or when replacing a defective control unit on site.

Depending on the situation the input can be effected by means of a stationary programming unit during production of the heating installation or by means of a portable programming unit for programming the heating installation on the users premises.

As a consequence, the number of types of control units which have to be physically manufactured and kept in stock is limited to one. Consequently, the cost price of the control unit is minimized. Moreover, the control unit can be reprogrammed for the changed circumstances simply and inexpensively on the premises of the user of the heating installation, as a result of which fresh insights into desired control characteristics or safety features of the heating installations can be accepted more easily by the user and implemented inexpensively.

Preferably, the group of variable parameter values is transmitted, without the use of wires, from a programming unit to the control unit and then stored in the memory. As a result of the lack of electrical connections, a relatively trouble-free transmission of the group of variable parameter values to the control unit is obtained by this means. This is in particular advantageous if programming has to be carried out relatively very frequently by means of the programming unit, for example during the series production of heating installations and the installation of control units therein. This advantage is also obtained if the measurement data obtained during a test on the heating installation are transmitted, without the use of wires, by the control unit to a receiver unit of another computer. The other computer can be a stationary main computer which is used for programming control units in heating installations produced in series or can be a portable computer unit which can be connected at a later time for processing the measurement data to yet another computer.

The invention also relates to a control unit as described in any of the claims 5-10, inclusive.

The invention is illustrated with reference to the drawings. In the drawings:
Fig. 1 shows a block diagram of a control system according to the invention;
Fig. 2 shows a flow chart of the method according to the invention; and
Fig. 3 shows another flow chart of a more extensive method according to the invention.

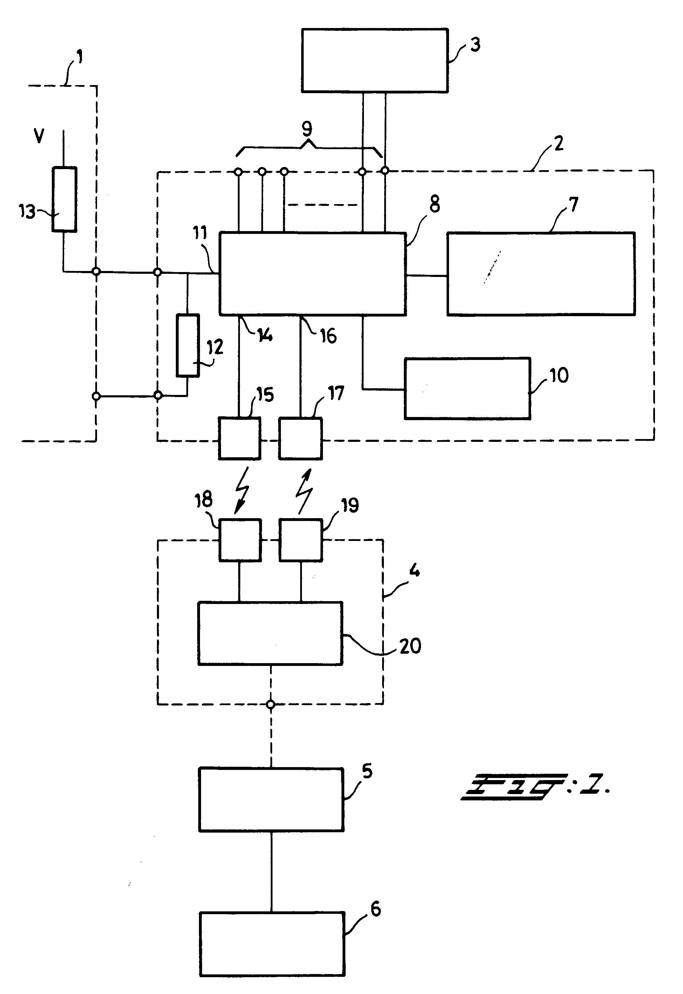

In Figure 1 a heating installation, with a burner, to be controlled is indicated by reference numeral 1. The heating installation is controlled by a control system comprising a control unit 2, a remote operating unit 3 and a remote programming unit 4 which is to be used during the production or maintenance of the control unit and which preferably can be connected via a modem 5 to a computer 6.

The control unit 2 has a central processing circuit 7, which can be formed by a monolithic microcomputer with a memory, of which one section (EEROM), which is preferably non-volatile, is electrically erasable and rewritable for storing therein parameter values associated with a desired functional performance of the operation of a heating installation, in which the control unit 2 has to be installed, and dependent on the use of the heating installation 1, said parameter values being those of instructions for the microcomputer which correspond to the desired performance. A microcomputer of this type can be a 68HC05B6 from Motorola.

The processing circuit 7 is connected to a coupling circuit 8, which can be an application specific integrated circuit (ASIC) with analog and digital circuits. The coupling circuit 8 has a number of inputs and outputs 9 for receiving measurement signals, for example from temperature and pressure sensors, and for supplying actuating signals to, for example, a fan, values and spark ignition elements. Some of the connections 9 are connected to the remote operating unit 3 for the, if appropriate time-dependent, setting of the desired temperature in a specific room and for setting a specific heating pattern if appropriate. Some functions of the remote operating unit 3 could also be fulfilled by an operating unit 10, of the control unit 2, connected to the processing circuit 8. The operating units 3 and 10 can comprise display screens for displaying the settings made and measured values.

An input 11 of the coupling circuit 8 is connected to the junction of the voltage divider, connected to a voltage source with a voltage V, of a resistor 12 installed in the control unit 2 and a resistor 13 installed in the heating installation 1. Irrespective of the type of heating installation 1 for which the control unit 2 is used, the resistor 12 has a fixed value and the resistor 13 has a specific value assigned to the heating installation 1. As a result, the voltage at the input 11 corresponds to the type and the application environment (for example depending on national requirements) of the heating installation 1.

An output 14 of the coupling circuit 8 is connected to an output unit 15. An input 16 of the coupling circuit 8 is connected to an input unit 17. The units 15 and 17 are preferably an infrared transmitter and an infrared receiver respectively, for communication with a infrared receiver 18 and an infrared transmitter 19, which are connected to a processing circuit 20 of the remove programming unit 4. The use of the stand-alone programming unit 4 and the lack of switches and/or electrical connecting elements between the control unit 2 and the programming unit 4 prevents it being possible for unauthorized persons deliberately or accidentally to modify the programmed data. Because there is no electrical connection, the communication can be established in an electrically safe and rapid manner. This is of importance in particular in "conveyor belt" series production of a series of heating installation 1, which may or may not be of the same type, in which control units 2 are fitted. If electrical connections were used, measures for electrical safety and for accurate transmission of data would have to be taken, while it would be possible for breakdowns to arise as a result of wear of the connections.

The programming unit 4 can be of more or less complex nature depending on the application, production of maintenance of heating installations 1. Preferably, the programming unit 4 has a connection for connection to the modem 5 for communication with a computer 6 for data exchange, for example by down-loading data to the programming unit 4 and for storing and processing measurement data from a heating installation 1 under test.

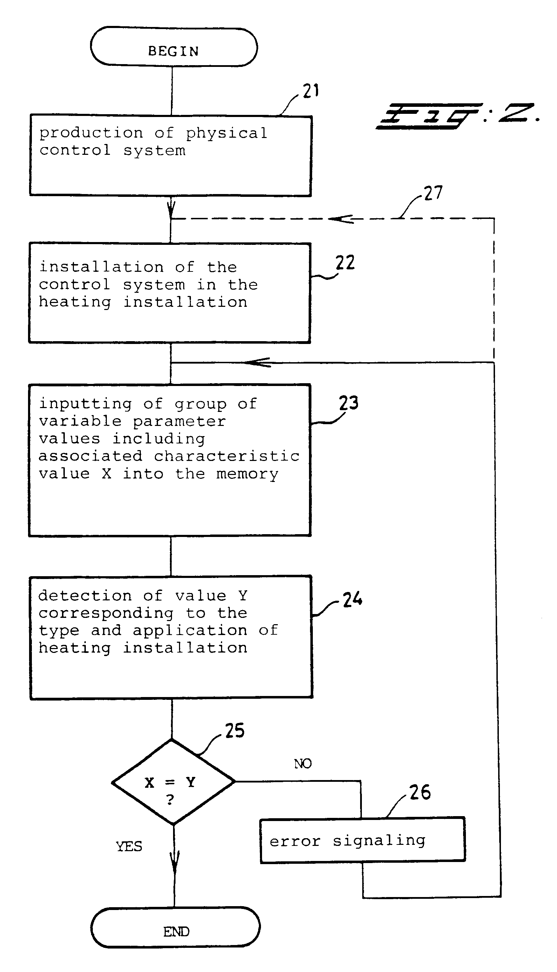

The method according to the invention for the production of a control system for a heating installation with a burner will be explained below with reference to the flow chart of the method which is shown in Fig. 2.

The first step, block 21, after BEGIN in the flow chart comprises the production of the physical control system, in particular of the control unit 2. In this step a program is stored in the memory of the central processing circuit 7 of the control unit 2, which program, with the exception of variable parameter values which are still to be input, is suitable for use for the control and protection of various types of heating installations 1 and application environments thereof.

Subsequently, block 22, the control system, in particular the control unit 2, is fitted in the heating installation 1. The heating installation 1 has the resistor 13 with a specific value dependent on the type of heating installation 1 and on the application environment of the heating installation 1.

Subsequently, in step 23, a group of variable parameter values is input by means of the programming unit 4 into the memory of the processing circuit 7. By this means the said program is completed. The group of variable parameter values comprises a characteristic value X assigned to the group. Subsequently, in step 24, a value Y which is determined by the voltage divider 12, 13 and corresponds to the type and the application of the heating installation 1, in which the control unit 2 is fitted, is detected.

Subsequently, in step 25, the characteristic value X received in the memory of the processing unit 7 is compared with the detected value Y. If X is identical to Y, the end of the production function shown in Fig. 2 is reached. If it follows from the comparison that X is not equal to Y, the control system gives an error signal, in block 26, and it is then possible to return to block 23 for re-inputting a group of variable parameter values, possibly with a different characteristic value X, into the memory. If an error signal frequently occurs for a given control system and/or a defect has previously been found in the control system, it is possible, instead of returning to block 23, to return to block 22, as indicated by the broken line 27, for replacement of the entire control system or of a part, for example the control unit 2, of the control system.

The steps in blocks 22 and 23 can be interchanged if appropriate.

With the exception of the production of the physical control system, step 21, the flow diagram shown in Fig. 2 can also be used for maintenance of the control system if the heating installation, in which it is fitted, has already been installed and has operated in accordance with the said program.

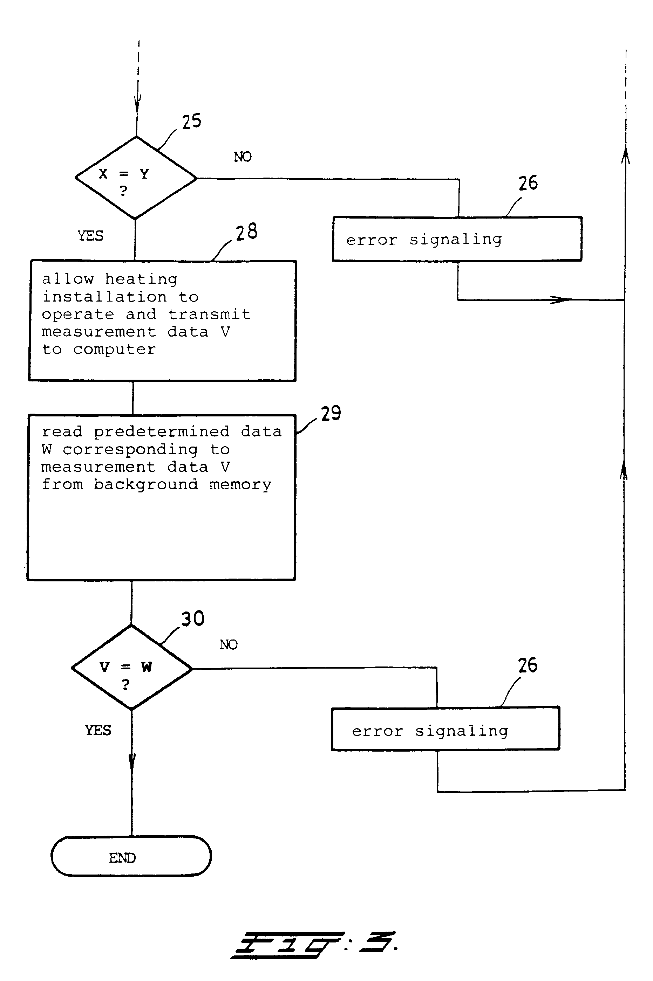

Fig. 3 shows a section of the flow chart which, compared with Fig. 2, is modified as an extension of the method according to the invention. If the characteristic value X stored in the memory of the processing circuit 7 is identical to the corresponding value Y a step, block 28, follows in accordance with Fig. 3, in which step the heating installation is allowed to operate in accordance with the stored completed program and the control system transmits measurement data V obtained from the heating installation to a monitoring computer.

In block 29 predetermined data W corresponding to the measurement data V are read from a background memory in the monitoring computer.

In block 30, the monitoring computer then compares the measurement data V and the corresponding predetermined data W with one another.

If it follows from the comparison that V is identical to W, the end of the production function, or, without block 21, the maintenance function, is reached. If it follows from the comparison that V is not identical to W an error signal is generated and it is possible to return to block 23 or block 22 of Fig. 2.

It can be seen from the above that by use of the invention a universally applicable control system is obtained, the functioning of which does not have to be specified earlier than at the time of the fitting thereof in a heating installation 1, the correctness of the specification and the functioning of the heating installation with the specified control system being monitored. In combination with the wire-free, in particular, infrared, transmission of variable parameter values, a long-term accurate transmission of data and thus a good monitoring of the functioning of the control system is made possible in this way.

It is pointed out that within the scope of the invention various modifications are possible, in particular with regard to the physical implementation thereof. Thus, the circuits 7 and 8 can be formed on a single substrate or part circuits thereof can be formed on different substrates. The detection of the type of heating installation 1 can also take place in another manner, for example by replacing the register 13 by a zener diode and measuring the voltage at the input 11 relative to the voltage V, or by using a multi-wire connection between the control unit 2 and the installation 1, the various wires of which, depending on the type of heating installation, are connected therein with points with different voltages.

## Claims

1. Method for the accomodation of a control unit (2) for an installation (1,9) to be controlled, the control unit (2) having a central processing unit (7) with a microcomputer and a memory, comprising a step (21) for storing in the memory a control program to be processed by the microcomputer, the program containing instructions for receiving measurement signals originating from sensors of the installation and instructions for controlling actuators of the installation depending on the values of the measurement signals, the instructions containing parameters, in a further step (23) a group of values of variable parameters dependent on the use of the control unit (2) is stored from outside the control unit (2) in a rewritable section of the memory, characterized in that to each group of variable parameter values there is assigned a variable parameter to which a value (X) is assigned exclusively to the group, in a still further step (24), after fitting of the control unit in the installation, the type of installation is detected, a value (Y) is assigned to a variable denoting the detected installation type, in a subsequent step (25), the value (X) assigned exclusively to said stored group of variable parameters is compared with the installation type variable value (Y), and an error signal is generated (26) if said compared values (X,Y) are not identical.

2. Method according to claim 1, characterized in that after finding identity in said comparison step (25), the functioning of the installation is tested (28-30) in accordance with the stored program and the stored parameters, the control unit (2) transmits (28) measurement data (V) obtained while carrying out the test, a computer (6) receives the measurement data (V) via a receiver unit and compares (30) said data (V) with corresponding data (W) stored in the computer (6) and the computer generates (26) an error signal if said measured and previous stored data (V,W) are not identical.

3. Method according to claim 1 or 2, characterized in that the group of variable parameter values is transmitted, without the use of wires, from a programming unit (4) to the control unit (2) and then stored in the memory.

4. Method according to claim 2, characterized in that the measurement data are transmitted, without the use of wires, by the control unit (2) to the receiver unit.

5. Control unit (2) for an installation (1,9) to be controlled comprising a central processing unit (7) with a microcomputer and a memory for storing therein a control program to be processed by the microcomputer and containing instructions for receiving measurement signals originating from sensors of the installation and instructions for controlling actuators of the installation depending on the values of the measurement signals, the instructions containing parameters, means (20) for inputting into a rewritable section of the memory variable parameter values dependent on the application of the control unit after its physical production, characterized in that the group of variable parameter values stored in the memory comprises a variable parameter value (X) assigned exclusively to the group and in that the control unit (2) and in cooperation therewith the installation (1) comprise detection means (7,8,11,12,13) for determination of the type of installation (1) in which the control unit (2) has been fitted and for assigning a value (Y) to a variable denoting the detected installation type, for comparing the stored assigned value (X) with the installation type variable value (Y) and for generating an error signal if said compared values (X,Y) are not identical.

6. Control unit (2) according to claim 5, characterized in that the detection means comprise identity signal generating means (12,13) which at least in part (13) are common with the installation (1).

7. Control unit (2) according to claim 6, characterized in that the identity signal generating means (12,13) comprise a voltage divider, a first resistor (12) of which has a fixed value and is fitted in the control unit (2) and a second resistor (13) which has a value assigned to the type of installation (1) and which is fitted in the installation (1).

8. Control unit (2) according to any of the claims 5 to 7, characterized by receiver means (17,19) for receiving from a programming installation (20), without the use of wires, a group of variable parameter values and for transmission thereof to the processing unit (7) for storage in the memory.

9. Control unit (2) according to claim 5, characterized by transmission means (15,18) for the transmission, without the use of wires, of measurement values (V) relating to the operation of the installation obtained by the processing unit (7).

10. Control unit (2) according to claim 8 or 9, characterized in that the means for transmission (15,17-19) without the use of wires are infrared transmission means.

## Patentansprüche

1. Verfahren zum Anpassen einer Regeleinheit (2) für eine zu regelnde Anlage (1,9), wobei die Regeleinheit (2) eine zentrale Prozeßeinheit (7) mit einem Mikrocomputer und einem Speicher aufweist, umfassend einen Verfahrensschritt (21) zum Speichern eines Regelprogrammes, das im Mikrocomputer zu verarbeiten ist, im Speicher, wobei das Programm Anweisungen zum Aufnehmen von Meßsignalen enthält, die von Sensoren der Anlage kommen sowie Anweisungen zum Regeln von Aktuatoren der Anlage, abhängig von Werten der Meßsignale, wobei die Anweisungen Parameter enthalten, wobei in einem weiteren Verfahrensschritt (23) eine Gruppe von Werten variabler Parameter, abhängig vom Gebrauch der Regeleinheit (2), von außerhalb der Regeleinheit (2) in einem wieder einschreibbaren Abschnitt des Speichers abgespeichert wird, dadurch gekennzeichnet, daß jeder Gruppe variabler Parameterwerte ein variabler Parameter zugeordnet wird, dem ein Wert (X) ausschließlich der Gruppe zugeordnet wird, wobei in einem weiteren Verfahrensschritt (24) nach dem Einbau der Regeleinheit in der Anlage die Bauart der Anlage erfaßt und ein Wert (Y) einer Variablen zugeordnet wird, die den erfaßten Anlagentyp bezeichnet, wobei in einem anschließenden Verfahrensschritt (25) der ausschließlich der genannten abgespeicherten Gruppe variabler Parameter zugeordnete Wert (X) mit dem Wert (Y) der Anlagenbauart verglichen, und dann ein Fehlersignal (26) erzeugt wird, wenn die miteinander verglichenen Werte (X,Y) nicht miteinander identisch sind.

2. Verfahren nach Anspruch 1, dadurch gekennzeichnet, daß nach dem Erkennen der Identität beim genannten Vergleichsschritt (25) das Funktionieren der Anlage (28-30) gemäß dem abgespeicherten Programm und den abgespeicherten Parametern getestet wird, daß die Regeleinheit (2) die erhaltenen Meßdaten (V) überträgt (28) während der Test ausgeführt wird, daß ein Computer (6) die gemessenen Daten (V) mittels einer Empfängereinheit aufnimmt und die genannten Daten (V) mit den entsprechenden Daten (W), die im Computer (6) abgespeichert sind, vergleicht (30), und daß der Computer dann ein Fehlersignal (26) erzeugt, wenn die gemessenen und die zuvor abgespeicherten Daten (V,W) nicht miteinander identisch sind.

3. Verfahren nach Anspruch 1 oder 2, dadurch gekennzeichnet, daß die Gruppe variabler Parameterwerte ohne Anwendung elektrischer Leiter von einer Programmiereinheit (4) zur Kontrolleinheit (2) übertragen und sodann im Speicher abgespeichert werden.

4. Verfahren nach Anspruch 2, dadurch gekennzeichnet, daß die gemessenen Daten ohne Anwendung elektrischer Leiter von der Regeleinheit (2) zur Empfängereinheit übertragen werden.

5. Regeleinheit (2) für eine zu regelnde Anlage (1,9), mit einer zentralen Prozeßeinheit (7) mit einem Mikrocomputer und einem Speicher, um hierin ein vom Mikrocomputer zu verarbeitendes Regelprogramm abzuspeichern, enthaltend Anweisungen zum Aufnehmen von Meßsignalen von Sensoren der Anlage sowie Anweisungen zum Regeln von Aktuatoren der Anlage, abhängig von Werten der Meßsignale, wobei die Anweisungen Parameter enthalten, Mittel (20) zum Eingeben in einen wieder einschreibbaren Abschnitt des Speichers variabler Parameterwerte, abhängig von der Anwendung der Regeleinheit nach deren Herstellung, dadurch gekennzeichnet, daß die Gruppe der im Speicher abgespeicherter variabler Parameterwerte einen variablen Parameterwert (X) aufweist, der ausschließlich der Gruppe zugeordnet ist, und daß die Regeleinheit (2) und in Zusammenarbeit hiermit die Anlage (1) einen Detektor (7,8,11,12,13) Erfassen der Bauart der Anlage (1) aufweist, in welche die Regeleinheit (2) eingebaut wurde, und zum Zuordnen eines Wertes (Y) zu einer Variablen, die erfaßte Anlagen-Bauart bezeichnet, zum Vergleichen des abgespeicherten, zugeordneten Wertes (X) mit der Variablen (Y) der Anlagen-Bauart sowie zum Erzeugen eines Fehlersignales für den Fall, daß die miteinander verglichenen Werte (X,Y) nicht miteinander identisch sind.

6. Regeleinheit (2) nach Anspruch 5, dadurch gekennzeichnet, daß der Detektor einen Identitätssignalgenerator (12,13) aufweist, der wenigstens teilweise (13) Bestandteil der Anlage (1) ist.

7. Regeleinheit (2) nach Anspruch 6, dadurch gekennzeichnet, daß der Identitätssignalgenerator (12,13) einen Spannungsteiler aufweist, einen ersten Widerstand (12), der einen festen Wert hat und in die Regeleinheit (2) eingebaut ist, sowie einen zweiten Widerstand (13), der einen Wert hat, welcher der Bauart der Anlage (1) zugeordnet ist und der in die Anlage (1) eingebaut ist.

8. Regeleinheit (2) nach einem der Ansprüche 5 bis 7, dadurch gekennzeichnet, daß ein Aufnehmer (17,19) vorgesehen ist, um von einer Programmieranlage (20) variabler Parameterwerte aufzunehmen und diese der Prozeßeinheit (7) zum Abspeichern im Speicher einzuspeisen.

9. Regeleinheit (2) nach Anspruch 5, gekennzeichnet durch eine Übertragungseinrichtung (15,18) zum drahtlosen Übertragen von Meßwerten (V), die sich auf den Betrieb der Anlage beziehen und die von der Prozeßeinheit (7) erhalten wurden.

10. Regeleinheit (2) nach Anspruch 8 oder 9, dadurch gekennzeichnet, daß die drahtlosen Übertragungsmittel (15,17-19) Infrarot-Übertragungsmittel sind.

## Revendications

1. Procédé d'ajustement d'une unité de commande (2) pour une installation (1,9) à commander, l'unité de commande (2) ayant une unité centrale de traitement (7) avec un microordinateur et une mémoire, ledit procédé comprenant une étape (21) pour stocker dans la mémoire un programme de commande à exécuter par microordinateur, le programme contenant des instructions pour recevoir des signaux de mesure fournis par des capteurs de l'installation et des instructions pour commander des actionneurs de l'installation en fonction des valeurs des signaux de mesure, les instructions contenant des paramètres,et une autre étape (23) dans laquelle un groupe de valeurs de paramètres variables dépendant de l'utilisation de l'unité de commande (2) est stocké de l'extérieur de l'unité de commande (2) dans une partie réenregistrable de la mémoire ; caractérisé en ce que, à chaque groupe de valeurs de paramètres variables, est attribué un paramètre variable auquel une valeur (X) est affectée exclusivement pour le groupe ; dans encore une autre étape (24), après montage de l'unité de commande dans l'installation, on détecte le type d'installation et on affecte une valeur (Y) à une variable représentant le type d'installation détecté ; et, dans une étape suivante (25), la valeur (X) affectée exclusivement audit groupe stocké de paramètres variables est comparée à la valeur variable de type d'installation (Y) et un signal d'erreur est engendré (26) si lesdites valeurs comparées (X,Y) ne sont pas identiques.

2. Procédé suivant la revendication 1, caractérisé en ce que, après obtention d'une identité dans ladite étape de comparaison (25), on vérifie le fonctionnement de l'installation (28-30) conformément au programme stocké et aux paramètres stockés, l'unité de commande (2) transmet (28) les résultats de mesure (V) obtenus pendant l'exécution du test, un ordinateur (6) reçoit les résultats de mesure (V) par l'intermédiaire d'une unité de réception et compare (30) lesdits résultats (V) à des données correspondantes (W) stockées dans l'ordinateur (6), et l'ordinateur engendre (26) un signal d'erreur si les valeurs mesurées (V) et les données précédemment stockées (W) ne sont pas identiques.

3. Procédé suivant la revendication 1 ou 2, caractérisé en ce que le groupe de valeurs de paramètres variables est transmis, sans utilisation de fils, d'une unité de programmation (4) à l'unité de commande (2) puis stocké dans la mémoire.

4. Procédé suivant la revendication 2, caractérisé en ce que les résultats de mesure sont transmis, sans utilisation de fils, par l'unité de commande (2) à l'unité de réception.

5. Unité de commande (2) pour une installation (1,9) à commander, comprenant une unité centrale de traitement (7) avec un microordinateur et une mémoire de stockage d'un programme de commande à exécuter par le microordinateur et contenant des instructions pour recevoir des signaux de mesure provenant de capteurs de l'installation et des instructions pour commander des actionneurs de l'installation en fonction des valeurs des signaux de mesure, les instructions contenant des paramètres, et des moyens (20) pour entrer dans une partie réenregistrable de la mémoire des valeurs de paramètres variables dépedant de l'application de l'unité de commande après sa production physique, caractérisée en ce que le groupe de valeurs de paramètres variables stocké dans la mémoire comprend une valeur de paramètre variable (X) attribuée exclusivement au groupe, et en ce que l'unité de commande (2) et, en coopération avec elle, l'installation (1) comprennent des moyens de détection (7,8,11,12,13) pour la détermination du type de l'installation (1) dans laquelle l'unité de commande (2) a été montée et pour l'affectation d'une valeur (Y) à une variable représentant le type d'installation détecté, pour comparer la valeur attribuée stockée (X) à la valeur variable de type d'installation (Y) et pour engendrer un signal d'erreur si les dites valeurs comparées (X,Y) ne sont pas identiques.

6. Unité de commande (2) suivant la revendication 5, caractérisée ence que les moyens de détection comprennent des moyens de génération de signal d'identité (12,13) qui sont au moins en partie (13) communs avec l'installation (1).

7. Unité de commande (2) suivant la revendication 6, caractérisée en ce que les moyens de génération de signal d'identité (12,13) comprennent un diviseur de tension dont une première résistance (12) a une valeur fixe et est placée dans l'unité de commande (2) et dont une deuxième résistance (13) a une valeur attribuée au type d'installation (1) et est située dans l'installation (1).

8. Unité de commande (2) suivant une quelconque des revendications 5 à 7, caractérisée par des moyens de réception (17,19) pour recevoir, à partir d'une installation de programmation (20) et sans utilisation de fils, un groupe de valeurs de paramètres variables et pour le transmettre à l'unité de traitement (7) afin de stocker ce groupe dans la mémoire.

9. Unité de commande (2) suivant la revendication 5 , caractérisée par des moyens de transmission (15,18) pour la transmission, sans utilisation de fils, de valeurs de mesure (V) relatives au fonctionnement de l'installation obtenu par l'unité de traitement (7).

10. Unité de commande (2) suivant la revendication 8 ou 9, caractérisée en ce que les moyens de transmission (15,17-19) sans utilisation de fils sont des moyens de transmission à infrarouge.
